# FASCICULE DE BREVET EUROPEEN

(11) **EP 2 731 918 B1**
(45) Date de publication et mention de la délivrance du brevet: **18.09.2019**
(21) Numéro de dépôt: 12729437.9
(22) Date de dépôt: 11.06.2012
(51) Int. Cl.: C03B 5/04, C03B 5/235, C03B 5/237

(54) **INSTALLATION ET PROCEDE DE FUSION DE VERRE**
GLASSCHMELZANLAGE UND VERFAHREN
GLASS-MELTING EQUIPMENT AND PROCESS

(30) Priorité: 15.07.2011 EP 11305932; 27.07.2011 EP 11305980
(43) Date de publication de la demande: 21.05.2014
(73) Titulaire: L'Air Liquide Société Anonyme pour l'Etude et l'Exploitation des Procédés Georges Claude, 75007 Paris (FR)
(72) Inventeur: JARRY, Luc, F-92190 Meudon (FR)
(74) Mandataire: De Vleeschauwer, Natalie Y.L.D.
(86) Numéro de dépôt international: PCT/EP2012/060957
(87) Numéro de publication internationale: WO 2013/010722

(56) Documents cités:
- EP-A2- 1 338 848
- US-A- 5 203 859
- US-A1- 2010 081 103
- US-A1- 2011 104 628

## Description

La présente invention concerne des procédés et fours de fusion de verre avec récupération d'énergie thermique des fumées générées pour le préchauffage d'un comburant et utilisant un comburant riche en oxygène.

Il est connu, notamment dans le domaine des fours de fusion de verre, d'utiliser un comburant riche en oxygène, tel qu'un oxydant ayant une teneur en oxygène d'au moins 80%vol, pour réduire les émissions polluantes (NOx, poussières) et la consommation énergétique des fours.

Selon une technologie particulièrement avantageuse décrite dans US-A-6071116, le bilan économique du four est amélioré en préchauffant au moins un réactif (comburant et/ou combustible) en amont des brûleurs. Ceci est réalisé en plaçant un ou des échangeurs de chaleurs sur le circuit des fumées en aval de la chambre de combustion du four dans le(s)quel(s) un fluide intermédiaire sûr, tel que de l'air, du CO₂, de l'azote et de la vapeur, est chauffé par échange thermique avec les fumées chaudes issues de la chambre de combustion et dans le(s)quel(s) le au moins un réactif est préchauffé par échange thermique avec le fluide intermédiaire chauffé.

Contrairement aux fours utilisant de l'air comme comburant, pour lesquels une alimentation suffisante en comburant ne pose normalement pas de problème étant donné l'abondance d'air ambiant, les fours utilisant un comburant riche en oxygène ont besoin d'une source dédiée et importante de comburant à proximité du four, tel qu'un pipeline, une unité de séparation des gaz de l'air, voire un réservoir de comburant avec une capacité suffisamment large. Ceci ne permet toutefois pas d'exclure une interruption de fourniture de comburant riche en oxygène, par exemple suite à un problème technique ou logistique.

Etant donné les dommages majeurs en cas d'arrêt de four suite à une interruption de fourniture de comburant riche en oxygène, il est connu d'installer un réservoir de dépannage, souvent désigné par le terme anglais « backup », pour le stockage d'une réserve de comburant riche en oxygène à proximité du four. Un tel « backup » permet une opération continue du four de fusion, souvent en mode dégradé, voire un simple maintien à température du four en cas de défaillance de la source habituelle du comburant riche en oxygène. Toutefois et en particulier dans le cas des fours de fusion de tirée importante, tels que les fours « float », le « backup » ne permet qu'une autonomie très limitée dans le temps.

US 5 203 859 divulgue un procédé de fusion de verre dans un four de fusion, ledit procédé utilisant un premier oxydant (air) et un deuxième oxydant (oxygène).

US-A-6071116 décrit une solution alternative avec préchauffage d'au moins un réactif de combustion par échange thermique avec les fumées à travers un fluide intermédiaire dans lequel on utilise de l'air comme fluide intermédiaire. Selon cette solution, on dirige un flux d'air intermédiaire chauffé vers les brûleurs comme comburant en cas d'interruption de fourniture du comburant riche en oxygène, permettant ainsi une autonomie prolongée du four.

La mise en oeuvre de cette proposition n'est toutefois pas dépourvue de problèmes. En effet, la quantité de fumées générées par l'aérocombustion est beaucoup plus importante que la quantité de fumées générées par l'oxycombustion à puissance identique. Un four de fusion conçu pour opération en oxycombustion n'est donc pas normalement apte à gérer le débit plus élevé de fumées générées à puissance analogue lors d'une opération éventuelle en aérocombustion, nécessitant ainsi une opération en régime sensiblement dégradé du four en cas d'aérocombustion. Un autre problème potentiel est que les brûleurs conçus pour un fonctionnement avec un comburant riche en oxygène ne permettent normalement pas un fonctionnement efficace et fiable avec de l'air comme comburant. Des brûleurs bicomburants conçus pour permettre un fonctionnement à la fois avec un comburant riche en oxygène et avec de l'air existent, mais sont plus couteux et leur complexité les rend potentiellement moins fiables dans un environnement particulièrement hostile telles que les chambres de combustion d'un four de fusion de verre.

La présente invention a pour but de remédier au moins partiellement aux problèmes décrits ci-dessus.

La présente invention propose d'atteindre ce but au moyen du procédé et de l'installation suivant l'invention tels que décrits ci-après.

La présente invention propose en particulier un procédé de fusion de verre dans un four de fusion, dans lequel on utilise un premier oxydant et un deuxième oxydant. Le premier oxydant est choisi parmi l'air et l'air enrichi en oxygène. Le deuxième oxydant a une teneur en oxygène de 80%vol à 100%vol, de préférence de 90%vol à 100%vol, la teneur en oxygène du deuxième oxydant étant supérieure à la teneur en oxygène du premier oxydant.

Selon l'invention, le verre est fondu dans un four de fusion comportant une chambre de fusion et une installation de préchauffage.

La chambre de fusion est équipée de n brûleurs pour la combustion d'un combustible dans la chambre, le nombre de brûleurs étant supérieur ou égal à 1 (n≥1). Ces n brûleurs génèrent ainsi de l'énergie thermique et un flux chaud de fumées qui présente une température à la sortie de la chambre de 1000°C à 1600°C.

Parmi les n brûleurs, on compte m brûleurs dits « premiers brûleurs », le nombre m de premiers brûleurs étant supérieur ou égal à 1 et inférieur ou égal au nombre n de brûleurs de la chambre de fusion (1≤m≤n).

Suivant l'invention, de la matière première solide est fondue dans la chambre de fusion de manière à obtenir du verre fondu. Le flux chaud de fumées issu de la chambre est introduit dans l'installation de préchauffage afin de récupérer une partie de l'énergie thermique présente dans ledit flux chaud de fumées par l'intermédiaire d'un fluide caloporteur.

Ainsi, on chauffe un flux d'un fluide caloporteur par échange thermique avec le flux chaud des fumées dans un premier échangeur thermique de l'installation de préchauffage de manière à générer, d'une part, un flux refroidi des fumées et, d'autre part, un flux chauffé du fluide caloporteur, ledit flux chauffé du fluide caloporteur ayant une température de 600°C à 900°C à la sortie du premier échangeur thermique.

Dans le contexte de la présente invention, on utilise le terme « échangeur thermique » au sens technique habituel du terme, c'est-à-dire pour désigner un appareil dans lequel au moins deux fluides de températures différentes circulent dans des enceintes distinctes et transmettent de la chaleur de l'une à l'autre.

Dans une première phase du procédé de fusion, on utilise comme fluide caloporteur le premier oxydant, qui consiste en de l'air ou de l'air enrichi en oxygène. On préchauffe un flux du deuxième oxydant, qui est plus riche en oxygène que le premier, dans un deuxième échangeur thermique de l'installation de préchauffage par échange thermique avec le flux chauffé du fluide caloporteur de manière à générer, d'une part, un flux préchauffé du deuxième oxydant ayant une température de 400°C à 650°C à la sortie du deuxième échangeur thermique et un flux tempéré du fluide caloporteur ayant une température de 350°C à 650°C à la sortie du deuxième échangeur thermique.

Dans cette première phase du procédé, un débit DO1 du flux préchauffé du deuxième oxydant (« oxydant riche ») est fourni aux m premiers brûleurs en tant que comburant, avec DO1 > 0 Nm³/h.

L'utilisation d'un tel comburant préchauffé et riche en oxygène permet de baisser les émissions polluantes et de réaliser un excellent rendement énergétique.

Dans le contexte présent, les volumes de gaz sont exprimés en mètres cubes normaux (Nm³), 1 Nm³ correspondant à la quantité d'un gaz qui occupe 1 m³ à 1 atm.

Le procédé suivant l'invention comporte également une deuxième phase dans laquelle on fournit aux m premiers brûleurs un débit DO2 du deuxième oxydant (oxydant riche) qui est supérieur à 0 Nm³/h, mais inférieur au débit DO1 du deuxième oxydant (oxydant riche) qui est fourni aux m premiers brûleurs pendant la première phase du procédé. Pendant cette deuxième phase du procédé, on fournit également un débit DA2 du premier oxydant aux m premiers brûleurs en tant que comburant, avec DA2 > 0 Nm³/h.

Suivant l'invention, le débit DA2 du premier oxydant est fourni comme comburant aux m premiers brûleurs sous forme d'une portion correspondante du flux chauffé de fluide caloporteur.

Pendant la deuxième phase, le débit DO2 du deuxième oxydant peut être fourni aux m premiers brûleurs selon trois options :
i) entièrement séparément du débit DA2 du premier oxydant fourni aux m premiers brûleurs,
ii) entièrement en mélange avec le débit DA2 du premier oxydant fourni aux m premiers brûleurs, ou encore
iii) partiellement mélangé avec le débit DA2 du premier oxydant et partiellement de façon séparée du débit DA2 du premier oxydant.

Dans le premier cas (fourniture entièrement séparée du premier oxydant (oxydant riche) et du deuxième oxydant aux premiers brûleurs), on utilisera le premier oxydant comme fluide caloporteur dans la deuxième phase, c'est-à-dire, pendant cette deuxième phase, le premier oxydant est chauffé par échange thermique avec le flux chaud des fumées dans le premier échangeur thermique.

Dans les deux autres cas (fourniture entièrement ou partiellement mélangée du premier et du deuxième oxydant aux premiers brûleurs), la nature du fluide caloporteur qui est chauffé par échange thermique avec les fumées dans le premier échangeur pendant la deuxième phase dépendra d'où l'on fait le mélange (partiel ou complet) entre le premier et le deuxième oxydant. Quand le débit DO2 du deuxième oxydant (oxydant riche) est partiellement ou totalement mélangé avec le premier oxydant en amont du premier échangeur thermique de l'installation de préchauffage (c'est-à-dire entre les deux sources d'oxydant et le premier échangeur thermique), le mélange ainsi obtenu en amont du premier échangeur thermique est utilisé comme fluide caloporteur. Par contre, quand le débit DO2 du deuxième oxydant n'est pas du tout mélangé avec le débit DA2 du premier oxydant en amont du premier échangeur thermique mais uniquement en aval du premier échangeur thermique, le premier oxydant est utilisé comme fluide caloporteur dans la deuxième phase du procédé.

En fournissant ainsi, dans la deuxième phase du procédé, un débit réduit du deuxième oxydant comme comburant aux m premiers brûleurs de la chambre de fusion en combinaison avec un débit du premier oxydant préchauffé, l'autonomie du four de fusion en cas de pénurie du deuxième oxydant est fortement augmentée. Ainsi, on (utilise) avantageusement le procédé suivant l'invention en cette deuxième phase en cas de pénurie du deuxième oxydant. Une opération en première phase est préférée quand il n'y a pas pénurie du deuxième oxydant, notamment afin de réduire les émissions polluantes qui sont de plus en plus soumises à des règlements stricts.

Etant donné que, pendant la deuxième phase, les m premiers brûleurs sont alimentés avec une combinaison de premier et second oxydants, et donc, globalement, avec une combinaison en comburants plus riche en oxygène que de l'air, le volume de fumées générées dans la chambre pendant la deuxième phase est relativement proche du volume de fumées générées pendant la première phase.

On note aussi qu'il n'est pas nécessaire d'utiliser comme premiers brûleurs des brûleurs bicomburants coûteux pouvant fonctionner à la fois en aérocombustion et en oxycombustion. Il suffit de faire appel à des brûleurs pouvant fonctionner avec des comburants riches en oxygène à teneur en oxygène variable. Un autre avantage important du procédé suivant l'invention est que les propriétés (taille, (profil de) température, luminosité, etc.) des flammes générées par les m premiers brûleurs pendant la deuxième phase sont proches des propriétés des flammes générées pendant la première phase, ce qui permet de limiter l'impact du changement de phase sur les propriétés du verre fondu obtenu et réduit fortement le risque d'endommagement de la chambre et de son équipement pendant la deuxième phase.

La « première phase » et la « deuxième phase » sont deux étapes distinctes du procédé suivant l'invention. Il n'est toutefois pas nécessaire que la première phase précède la deuxième phase dans le temps. L'inverse est également possible, ainsi qu'une opération du four comportant plusieurs premières et/ou deuxièmes phases. Ainsi, il est envisageable de démarrer l'installation selon la deuxième phase du procédé avant de passer à la première phase.

Suivant une forme de réalisation, il n'y a pas de préchauffage d'un flux du deuxième oxydant (oxydant riche) (par échange thermique avec le flux chauffé du fluide caloporteur dans le deuxième échangeur thermique) pendant la deuxième phase du procédé. Le débit DO2 du deuxième oxydant est alors fourni aux m premiers brûleurs sans préchauffage préalable dans le deuxième échangeur thermique.

Suivant une forme de réalisation préférée, tous les brûleurs de la chambre de fusion sont des premiers bruleurs, c'est-à-dire m = n.

Le premier oxydant peut être de l'air et notamment de l'air ambiant fourni par une soufflante d'air. Ceci est notamment indiqué quand le flux tempéré de fluide caloporteur est finalement évacué par la cheminée.

Le premier oxydant peut également être de l'air enrichi en oxygène, par exemple de l'air ambiant fourni par une soufflante et enrichi en oxygène en aval de cette soufflante. L'oxygène pour l'enrichissement en oxygène du premier oxydant peut notamment être fourni par la deuxième source qui fournit également le deuxième oxydant. Cette forme de réalisation peut être indiquée quand, pendant la ou les premières phases du procédé, le flux tempéré de fluide caloporteur est utilisé comme oxydant en aval de l'installation de préchauffage. Par exemple, le flux tempéré de fluide caloporteur est utilisé comme comburant dans une chaudière également présente sur le site.

Ainsi, quand le premier oxydant présente une teneur en oxygène du premier oxydant entre 21%vol et 40%vol, voire entre 21%vol et 25%vol, le flux tempéré de fluide caloporteur peut, par exemple, avantageusement être utilisé pendant la première phase comme comburant dans un procédé ou dispositif d'aérocombustion ou de combustion avec de l'air faiblement enrichi en oxygène.

Quand la teneur en oxygène du premier oxydant est de 40%vol à 90%vol, mais toujours inférieure à la teneur en oxygène du deuxième oxydant, le fluide caloporteur peut, par exemple, avantageusement être utilisé pendant la première phase comme comburant dans un procédé ou dispositif d'oxycombustion.

Comme indiqué ci-dessus, le deuxième oxydant (oxydant riche) a une teneur en oxygène de 80%vol à 100%vol. De préférence, le deuxième oxydant présente une teneur en oxygène de 90%vol à 100%vol. Si la capacité du four et donc son besoin en deuxième oxydant pendant la première phase est suffisamment faible, l'alimentation du four en deuxième oxydant peut être assurée par un ou plusieurs réservoirs de stockage du deuxième oxydant. L'alimentation du four en deuxième oxydant peut être aussi assurée par une unité de séparation des gaz de l'air ou d'un pipeline. Dans ce cas, il est souhaitable d'également prévoir un réservoir de dépannage ou « backup » du deuxième oxydant en cas de défaillance de l'unité de séparation des gaz de l'air ou du pipeline.

Le four de fusion peut être un four à brûleurs longitudinaux. Dans ce cas, le four comporte typiquement un nombre très limité de brûleurs, par exemple 1 ≤ n ≤ 4.

Toutefois, l'invention est particulièrement intéressante pour les fours à brûleurs transversaux et en particulier pour les fours à brûleurs transversaux de type fours de fusion « float ». Dans le cas d'un tel four de fusion de type « float », la configuration des brûleurs est généralement constituée d'un nombre important de brûleurs placés perpendiculairement à l'axe longitudinal de la chambre de fusion. La puissance de chacun des brûleurs est individuellement ajustée, ou ajustée par groupe de brûleurs, pour établir le profil thermique recherché dans la chambre de fusion.

La puissance totale du ou des brûleurs d'un four de fusion de verre est ajustée en fonction de la tirée (débit de verre fondu) du four.

Le four de fusion peut comporter plusieurs installations de préchauffage. Par exemple, le four peut comporter deux installations de préchauffage : une installation par côté latéral du four. Ceci est notamment intéressant pour les fours « float ». Dans ce cas, chaque installation de préchauffage fournira du comburant à un nombre (ou groupe) de mᵢ de premiers bruleurs, avec ∑ mᵢ ≤ n.

Une installation de préchauffage peut aussi comporter plusieurs deuxièmes échangeurs thermiques. Dans ce cas, chaque deuxième échangeur thermique fournira, pendant la première phase, un flux chaud de deuxième oxydant à un nombre (ou groupe) de mⱼ de premiers bruleurs, avec ∑ mⱼ ≤ n.

Ainsi, une installation de préchauffage peut comporter un premier échangeur thermique situé à proximité de la sortie de fumées de la chambre et au moins un deuxième échangeur thermique de chaque côté du four. Par exemple, dans le cas d'un four à boucle chauffé par un premier brûleur à gauche et un autre premier brûleur à droite de la sortie de fumées de la chambre, l'installation de préchauffage peut comporter un premier échangeur thermique derrière la paroi amont à proximité de la sortie de fumées et un deuxième échangeur thermique de chaque côté du premier échangeur thermique derrière la paroi amont, chaque deuxième échangeur étant à proximité d'un des deux premiers brûleurs. Chaque deuxième échangeur thermique est alors relié au premier échangeur thermique de manière à ce que, pendant la première phase du procédé, une portion du flux chauffé de fluide caloporteur est fournie à chaque deuxième échangeur thermique.

De manière analogue, il est possible, notamment dans le cas d'un four, tel qu'un four « float » chauffé par des brûleurs montés dans les deux parois latérales, d'utiliser une installation de préchauffage qui comporte un premier échangeur thermique à proximité d'une sortie de fumées et un deuxième échangeur thermique à côté de chaque paroi latérale du four. Chaque deuxième échangeur thermique est alors relié au premier échangeur thermique de manière à ce que, pendant la première phase du procédé, une portion du flux chauffé de fluide caloporteur est fournie à chaque deuxième échangeur thermique de l'installation de préchauffage.

Suivant une forme de réalisation avantageuse, l'installation de préchauffage est également utilisée pour le préchauffage du combustible en amont des brûleurs et donc de la chambre de fusion. Le préchauffage du combustible peut ainsi être réalisé par échange thermique avec le flux chaud de fumées et/ou par échange thermique avec le flux chauffé de fluide caloporteur.

Suivant une forme de réalisation avantageuse du procédé, on vérifie de manière continue ou discontinue la quantité (débit ou quantité globale) du deuxième oxydant pouvant être fournie au four de fusion par la deuxième source. Cette quantité disponible du deuxième oxydant est comparée avec le besoin en deuxième oxydant (à prévoir) du four de fusion. Le résultat de cette comparaison peut alors être utilisé pour déterminer la phase (première ou deuxième phase) dans laquelle il convient d'opérer le four de fusion et/ou, pendant une deuxième phase du procédé, de déterminer le rapport DO2/DA2 qu'il convient d'appliquer. Ainsi, quand le four fonctionne en première phase et que l'on constate une pénurie (actuelle ou à prévoir) du deuxième oxydant, le procédé suivant l'invention passera en deuxième phase. De manière analogue, quand le four fonctionne en deuxième phase et que l'on constate qu'il n'y pas ou plus de pénurie (actuelle ou à prévoir) du deuxième oxydant, il est utile de passer le procédé en première phase. D'autres mesures, telles qu'une réduction de la tirée du four, voire l'arrêt de la production de verre fondu peuvent également s'avérer nécessaire en cas de pénurie du deuxième oxydant (oxydant riche).

De préférence, on procède de manière automatisée, d'une part à la vérification continue ou discontinue de la quantité (débit ou quantité globale) du deuxième oxydant pouvant être fourni au four de fusion par la deuxième source, et d'autre part à la comparaison de cette quantité disponible du deuxième oxydant avec le besoin en deuxième oxydant du four de fusion, le résultat de cette comparaison étant utilisé pour le réglage ou le choix de la phase (première ou deuxième phase) d'opération et/ou, pendant une deuxième phase, pour le réglage du rapport DO2/DA2.

Suivant une forme de réalisation particulière, le deuxième oxydant est fourni pendant la première phase du procédé par une source principale du deuxième oxydant (typiquement un pipeline ou une unité de séparation des gaz de l'air) et, pendant la deuxième phase, le deuxième oxydant est fourni par un réservoir de dépannage ou « backup ».

La présente invention concerne également une installation de fusion de verre apte à être mise en oeuvre dans le procédé suivant l'invention.

L'installation de fusion suivant l'invention comporte une unité de fourniture avec notamment une source de combustible, une première source d'un premier oxydant qui consiste en de l'air ou de l'air enrichi en oxygène et une deuxième source d'un deuxième oxydant (oxydant riche) ayant une teneur en oxygène de 80%vol à 100%vol, de préférence de 90%vol à 100%vol, et supérieure à la teneur en oxygène du premier oxydant.

L'installation de fusion comporte également un four de fusion comportant une chambre de fusion équipée de n brûleurs pour la combustion d'un combustible avec du comburant de manière à générer, à l'intérieur de la chambre, de l'énergie thermique et un flux chaud de fumées. La chambre comporte au moins un brûleur, c'est-à-dire n ≥ 1. Ladite chambre de fusion est également munie d'une sortie de fumées pour l'évacuation de la chambre du flux chaud de fumées,

Le four de fusion inclut aussi une installation de préchauffage telle que décrite ci-après.

L'installation de fusion suivant l'invention comporte aussi un réseau de canalisations qui relie l'unité de fourniture, l'installation de préchauffage et la chambre de fusion.

Suivant l'invention, m des n brûleurs sont des premiers brûleurs, avec 1 ≤ m ≤ n.

L'installation de préchauffage comporte un premier échangeur thermique et un deuxième échangeur thermique. Le premier échangeur thermique est conçu pour le chauffage d'un flux d'un fluide caloporteur contenant du premier oxydant par échange thermique entre ledit fluide caloporteur et le flux chaud de fumées, le réseau de canalisations reliant (a) la sortie de fumées de la chambre de fusion à une entrée de flux chaud de fumées dudit premier échangeur thermique, et (b) la première source à une entrée de fluide caloporteur à chauffer dudit premier échangeur thermique. Le deuxième échangeur thermique est conçu pour le préchauffage d'un flux du deuxième oxydant (oxydant riche) par échange thermique avec le flux chauffé de fluide caloporteur, le réseau de canalisations reliant (a) la deuxième source (du deuxième oxydant) avec une entrée du deuxième oxydant du deuxième échangeur, (b) une sortie de flux chauffé de fluide caloporteur du premier échangeur thermique avec une entrée de flux chauffé de fluide caloporteur du deuxième échangeur thermique, et (c) une sortie d'un flux chaud du deuxième oxydant (oxydant riche) du deuxième échangeur thermique avec une entrée de comburant des m premiers brûleurs.

Suivant l'invention, le réseau de canalisations relie également une sortie de flux chauffé de fluide caloporteur du premier échangeur thermique avec une entrée de comburant des m premiers brûleurs.

Ce qui plus est, le réseau de canalisations est muni d'un système de réglage et de distribution pour le réglage et la distribution du débit du premier oxydant vers les m premiers brûleurs et pour le réglage et la distribution du débit du deuxième oxydant vers les m premiers brûleurs.

Ces débits sont en premier lieu déterminés par les besoins du four et notamment par la tirée du four et la nature de la matière première à fondre et du verre fondu à obtenir.

Ainsi, dans le présent contexte, on comprend que deux éléments de l'installation sont « reliés » par le réseau de canalisations quand le réseau permet l'écoulement d'un fluide entre les deux éléments, même si l'unité de réglage permet de bloquer un tel écoulement entre certains éléments ainsi liés, par exemple au moyen d'une vanne ou d'un autre dispositif de fermeture partielle ou totale.

Le système de réglage et de distribution peut comporter une unité de réglage. L'unité de réglage est avantageusement reliée à la deuxième source qui fournit le deuxième oxydant. L'unité de réglage est alors apte à régler les débits de premier et de deuxième oxydants vers les m premiers brûleurs en fonction d'un débit disponible de deuxième oxydant détecté par l'unité de réglage. De cette manière, l'unité de réglage permet d'adapter le fonctionnement du four en cas de perturbation de la fourniture normale du deuxième oxydant par la deuxième source.

L'unité de fourniture de l'installation suivant l'invention comporte avantageusement un réservoir de dépannage contenant du deuxième oxydant, ledit réservoir de dépannage pouvant être utilisé comme source alternative ou « backup » du deuxième oxydant en cas d'interruption de la fourniture du deuxième oxydant par la deuxième source, en particulier dans le cas d'une interruption prolongée, significative ou totale de la fourniture par la deuxième source.

Le réseau de canalisations relie alors également le réservoir de dépannage avec les m premiers brûleurs.

La fourniture partielle ou totale du deuxième oxydant par le réservoir de dépannage est avantageusement réglée par l'unité de réglage.

De manière avantageuse, le réseau de canalisations relie la sortie de flux chauffé de fluide caloporteur du premier échangeur thermique avec une entrée de comburant des m premiers brûleurs sans passage par le deuxième échangeur thermique.

Il est à noter que les m premiers brûleurs peuvent comporter plusieurs entrées de comburant, notamment pour réaliser une combustion étagée par injections de plusieurs jets de comburant dans le four. Par exemple, les m premiers brûleurs peuvent comporter une entrée pour le deuxième oxydant et une entrée pour le flux de fluide caloporteur.

Suivant une forme de réalisation, le réseau de canalisations relie aussi, en aval du premier échangeur thermique, la deuxième source d'oxydant avec la sortie de flux chauffé de fluide caloporteur. Ceci permet, en particulier pendant la deuxième phase du procédé, de mélanger au moins une partie du deuxième oxydant (oxydant riche) avec au moins une partie du fluide caloporteur chauffé, le mélange ainsi obtenu pouvant être fourni aux m premiers brûleur en tant que comburant. Le réseau de canalisations peut alors être muni d'un ou plusieurs dispositifs de fermeture pour le réglage dudit mélange, tels qu'une ou des vannes qui sont de préférence contrôlées par l'unité de réglage, ou encore par des dispositifs de fermeture manuelle. En effet, certaines vannes, et en particulier les vannes pouvant être actionnées par une unité de réglage, sont peu appropriées pour le réglage pendant une période plus ou moins longue de débits d'oxydants chauds tels que le fluide caloporteur chauffé et le deuxième oxydant (oxydant riche) préchauffé. Il peut ainsi être indiqué d'utiliser d'autres dispositifs de fermeture plus robustes pour les canalisations transportant des oxydants chauds, en particulier des dispositifs de fermeture manuelle

Le réseau de canalisations peut également relier la deuxième source d'oxydant avec l'entrée de fluide caloporteur du premier échangeur thermique. Ceci permet, notamment pendant la deuxième phase du procédé, de mélanger au moins partiellement le deuxième oxydant avec le premier oxydant et d'utiliser le mélange ainsi obtenu comme fluide caloporteur dans le premier échangeur thermique et le flux chauffé de ce fluide caloporteur peut être fourni aux m premiers brûleurs en tant que comburant. Le réseau de canalisations peut alors être muni d'un ou plusieurs dispositifs de fermeture pour le réglage dudit mélange, tels qu'une ou des vannes qui sont de préférence contrôlées par l'unité de réglage, ou encore par des dispositifs de fermeture manuelle.

Le réseau de canalisations relie de préférence également la sortie de flux chauffé de fluide caloporteur du premier échangeur thermique avec une entrée de comburant des m premiers brûleur sans que ledit flux chauffé de fluide caloporteur passe par le deuxième échangeur thermique. Dans ce cas, le réseau de canalisations est avantageusement muni de dispositifs de fermeture permettant, d'une part, de bloquer partiellement ou totalement l'écoulement du flux chauffé de fluide caloporteur vers l'entrée de comburant des m premiers brûleurs sans passage par le deuxième échangeur thermique, notamment pendant une première phase du procédé suivant l'invention, et, d'autre part, de bloquer partiellement ou totalement l'écoulement du flux chauffé de fluide caloporteur vers le deuxième échangeur thermique, notamment pendant une deuxième phase du procédé suivant l'invention. Lesdits dispositifs de fermeture peuvent être des vannes, qui sont de préférence contrôlées par l'unité de réglage, ou des dispositifs de fermeture manuelle.

La chambre de fusion peut également comporter des brûleurs autres que les premiers brûleurs. Dans ce cas, m < n. De préférence, l'ensemble des brûleurs de la chambre de fusion sont des premiers brûleurs reliés à l'installation de préchauffage comme décrits ci-dessus. Dans ce cas m = n.

Les brûleurs, et en particulier les premiers brûleurs, peuvent en particulier être des brûleurs à combustion étagée, tels que les brûleurs commercialisés par la demanderesse sous la dénomination commerciale d'ALGLASS SUN®.

Quand le premier oxydant est de l'air, la première source d'oxydant comporte de préférence une ou plusieurs soufflantes ou compresseurs d'air ambiant.

Pour la fourniture du deuxième oxydant (oxydant riche), la deuxième source d'oxydant comporte typiquement une unité de séparation des gaz de l'air, un pipeline ou un réservoir de stockage du deuxième oxydant. De préférence, la deuxième source d'oxydant comporte une unité de séparation des gaz de l'air ou un pipeline comme source principale du deuxième oxydant et un réservoir de dépannage ou « backup » du deuxième oxydant comme source auxiliaire du deuxième oxydant, en particulier en cas de défaillance de la source principale du deuxième oxydant.

Quand le premier oxydant est de l'air enrichi en oxygène, la première source d'oxydant comporte avantageusement une ou plusieurs soufflantes ou compresseurs d'air ambiant et une connexion fluidique entre la première et la deuxième source d'oxydant permettant de mélanger une quantité contrôlée du deuxième oxydant avec de l'air afin d'obtenir ainsi un mélange qui constitue le premier oxydant suivant l'invention.

De manière préférée, l'unité de réglage de l'installation est apte à régler la quantité contrôlée du deuxième oxydant qui est mélangée avec de l'air de manière à obtenir un premier oxydant présentant une teneur en oxygène du premier oxydant de 21%vol à 40%vol, voire de 21%vol à 25%vol, ou encore entre 40%vol et 90%vol, mais toujours inférieure à la teneur en oxygène du deuxième oxydant. Le premier échangeur thermique et/ou le deuxième échangeur thermique peuvent être un/des échangeurs thermiques tubulaires.

Le premier échangeur thermique peut être entouré d'une première virole et le deuxième échangeur thermique est entouré d'une deuxième virole séparée de la première virole, et le premier et le deuxième échangeur thermiques peuvent avoir des positions distinctes pas rapport à la chambre de fusion. Selon une forme de réalisation alternative, le premier et le deuxième échangeur thermique sont entourés d'une même virole.

Le four de fusion peut être un four à brûleurs longitudinaux ou un four à bruleurs transversaux tel qu'un four « float ».

L'invention et ses avantages sont décrits plus en détail dans les exemples ci-après, référence étant faite aux figures 1 à 5, dans lesquelles :
- la figure 1 est une représentation schématique de l'opération d'une installation de fusion suivant l'invention lors d'une première phase du procédé suivant l'invention,
- les figures 2 à 4 sont des représentations schématiques de trois formes de mise en oeuvre distinctes de l'opération de l'installation selon la figure 1 lors d'une deuxième phase du procédé,
- la figure 5 est une représentation schématique d'une installation alternative suivant l'invention dans laquelle certaines canalisations sont équipées de dispositifs de fermeture manuelle.

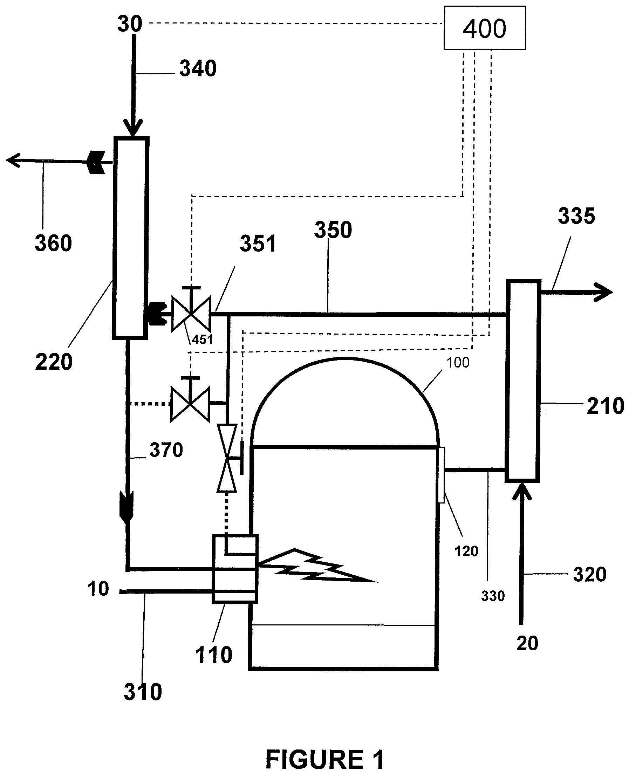

L'installation illustrée dans la figure 1 comporte un four avec une chambre de fusion 100 équipée d'un nombre de premiers brûleurs 110 (un seul premier brûleur est représenté) et une sortie de fumées 120. Le four comporte également une installation de préchauffage comportant un premier échangeur thermique 210 et un deuxième échangeur thermique 220. Un réseau de canalisations relie le premier échangeur thermique 210, le deuxième échangeur thermique 220, les premiers brûleurs 110 et la sortie de fumée 120 de la chambre de fusion 100.

Une source 10 de combustible, tel qu'un combustible gazeux, est reliée par une canalisation 310 à une entrée de combustible des premiers brûleurs 110. Cette source 10 fournit du combustible aux premiers brûleurs 110.

Une source d'air 20, utilisée comme premier oxydant dans le procédé illustré, est reliée par une canalisation 320 à une entrée de fluide caloporteur du premier échangeur thermique 210. La sortie de fumées 120120 de la chambre de fusion 100 est reliée par la canalisation 330 par une entrée de fumées du premier échangeur thermique 210. A l'intérieur du premier échangeur thermique 210, les fumées qui ont une température de 1000°C à 1600°C à la sortie du four, chauffent le fluide caloporteur (air) par échange thermique. On obtient ainsi un flux refroidi de fumées qui est évacué du premier échangeur thermique 210 par la canalisation 335 et un flux chaud du fluide caloporteur (air) qui est évacué du premier échangeur thermique 210 par la canalisation 350.

Une source 30 du deuxième oxydant, typiquement un gaz contenant 90%vol d'oxygène, fournit un flux du deuxième oxydant qui est amené vers une entrée du deuxième oxydant du deuxième échangeur thermique 220 par la canalisation 340.

Le réseau de canalisations de l'installation comporte également une unité de réglage 400. Cette unité de réglage 400 est reliée à la source 30 du deuxième oxydant et détecte le débit ou volume du deuxième oxydant disponible.

L'unité de réglage est également reliée à des vannes de réglage du réseau de canalisations qui permettent de contrôler notamment les débits de fluide caloporteur (dans le cas illustré : le premier oxydant) vers le deuxième échangeur thermique 220 et les premiers brûleurs 110 et les débits de deuxième oxydant vers les premiers brûleurs 110. L'unité de réglage règle ainsi les débits du premier et du deuxième oxydants vers les premiers brûleurs. En particulier, en cas de détection de pénurie actuelle ou à prévoir du deuxième oxydant, l'unité de réglage adaptera (comme expliqué plus en détail ci-après) les écoulements du premier et du deuxième oxydants dans l'installation.

Lors de la première phase du procédé telle qu'illustrée dans la figure 1, le flux chaud de fluide caloporteur (air), ayant une température de 600°C à 900°C, est amené vers une entrée de fluide caloporteur du deuxième échangeur thermique 220 par la branche 351 de la canalisation 350, cette branche 351 étant munie d'une vanne 451 permettant de partiellement ou totalement fermer la branche 351 et de régler ainsi le débit de fluide caloporteur chaud qui entre dans le deuxième échangeur thermique 220.

A l'intérieur du deuxième échangeur thermique 220, le deuxième oxydant (oxydant riche) est préchauffé jusqu'à une température de 400°C à 650°C par échange thermique avec le fluide caloporteur chaud. Le fluide caloporteur est évacué du deuxième échangeur thermique 220 par la canalisation 360 à une température tempérée de 350°C à 650°C. Le deuxième oxydant préchauffé est évacué du deuxième échangeur thermique 220 par la canalisation 370. Cette canalisation 370 amène le deuxième oxydant préchauffé vers une entrée de comburant des premiers brûleurs 110.

Lors de la première phase du procédé telle qu'illustrée dans la figure 1, il n'y a pas de fourniture de premier oxydant (air) aux premiers brûleurs 110 pendant la première phase. Lesdits premiers brûleurs 110 combinent le deuxième oxydant préchauffé avec le combustible de manière à générer une oxycombustion bas-NOx du combustible dans la chambre de fusion 100.

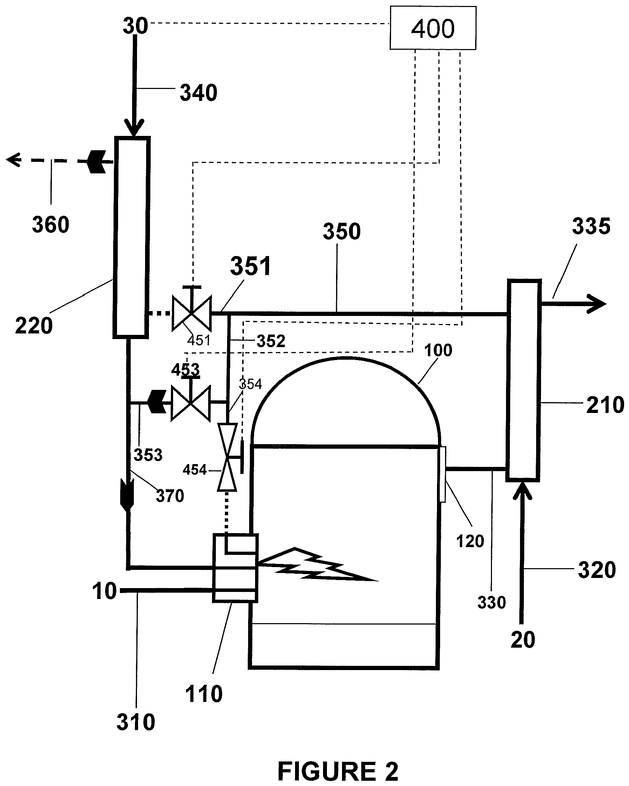

Selon la forme de mise en oeuvre de la deuxième phase illustrée dans la figure 2, la branche 351 de la canalisation 350 est totalement fermée par la vanne 451 et le flux chaud de fluide caloporteur est amené par les branches 352, 353 de cette canalisation 350 vers la canalisation 370 qui connecte la sortie du deuxième oxydant du deuxième échangeur thermique 220 avec les premiers brûleurs 110. La branche 353 est également munie d'une vanne 453 qui permet de partiellement ou totalement fermer la branche 353 et ainsi de réguler le débit du fluide caloporteur (air) chaud envoyé vers la canalisation 370.

Dans la forme d'exécution illustrée, il n'y pas de fourniture de fluide caloporteur chaud vers le deuxième échangeur thermique 220 pendant la deuxième phase du procédé. Par conséquent, le flux du deuxième oxydant (oxydant riche) fourni par la source 30 au deuxième échangeur thermique 220 ne subit pas de préchauffage dans le deuxième échangeur thermique 220. On obtient ainsi, en aval du deuxième échangeur thermique 220, un mélange du deuxième oxydant (oxydant riche) non-préchauffé avec du fluide caloporteur chaud et ce mélange est amené vers une entrée de comburant des premiers brûleurs 110 par la canalisation 370.

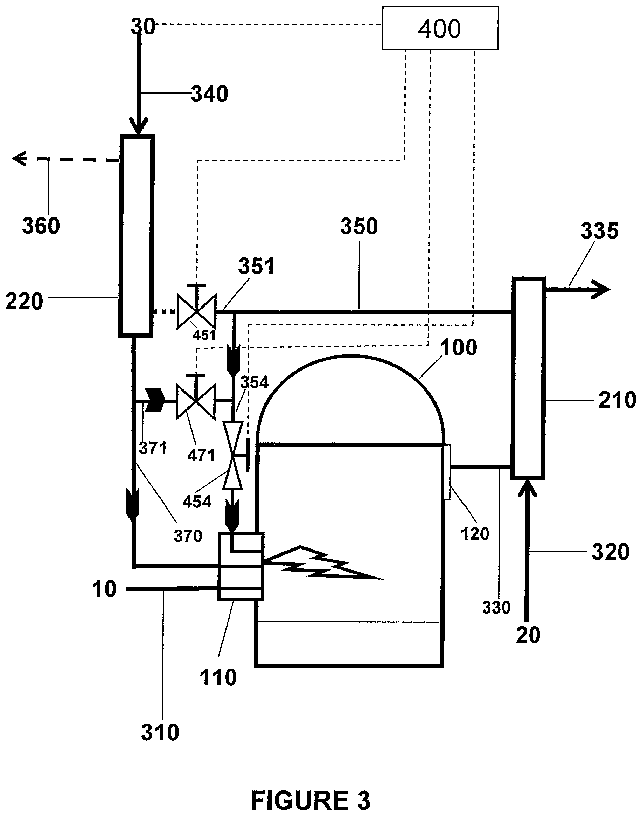

Dans la forme de réalisation de la deuxième phase illustrée dans la figure 3, il n'y a à nouveau pas de fourniture de fluide caloporteur chaud vers le deuxième échangeur thermique 220 et la canalisation 370 amène un flux non-préchauffé du deuxième oxydant (oxydant riche) vers une entrée de comburant des premiers brûleurs 110. Le fluide caloporteur (air) chaud est amené vers une autre entrée de comburant des premiers brûleurs 110 au moyen des branches 352 et 354 de la canalisation 350. La branche 354 est munie d'une vanne 454 qui permet de fermer partiellement ou totalement la branche 354 et ainsi de réguler le débit d'oxydant amené vers les premiers brûleurs 110 par la branche 354. Une branche 371 de la canalisation 370 relie la canalisation 370 avec la branche 354 de la canalisation 350 et permet d'amener une portion du deuxième oxydant vers la branche 354 de manière à mélanger une portion du deuxième oxydant non-préchauffé avec le fluide caloporteur (air) chaud avant que ce dernier soit fourni aux premiers brûleurs en tant que comburant. La branche 370 est munie d'une vanne 471 qui permet de fermer partiellement ou totalement la branche 371 et ainsi de régler la portion du deuxième oxydant (oxydant riche) qui est fournie aux premiers brûleurs sans mélange préalable avec le premier oxydant (air) chaud et la portion du deuxième oxydant (oxydant riche) qui est fournie aux premiers brûleurs après mélange avec le premier oxydant (air) chaud.

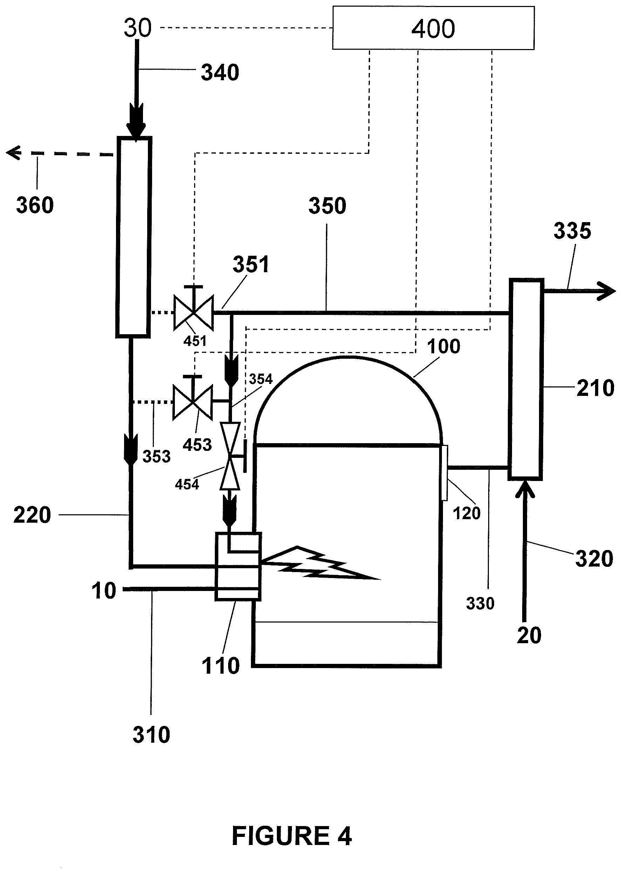

Dans la forme de réalisation de la deuxième phase illustrée dans la figure 4, aucun mélange n'a lieu entre le premier oxydant (air) chaud et le deuxième oxydant (oxydant riche) en amont des premiers brûleurs 110. Les premiers brûleurs sont des brûleurs pour la combustion étagée, un des premier et deuxième oxydants étant fourni aux premiers brûleurs en tant que comburant primaire et l'autre en tant que comburant secondaire.

Comme indiqué ci-dessus, il peut être indiqué d'utiliser sur des canalisations transportant des flux d'oxydants chauds, au lieu de vannes pouvant être actionné par l'unité de réglage, des dispositifs de fermeture plus robuste. Des dispositifs de fermeture avancés et aptes à régler des flux d'oxydants chauds sont décrits notamment dans FR-A-2863678 et dans la demande de brevet européenne n° 10306477.0 déposée le 21 décembre 2010.

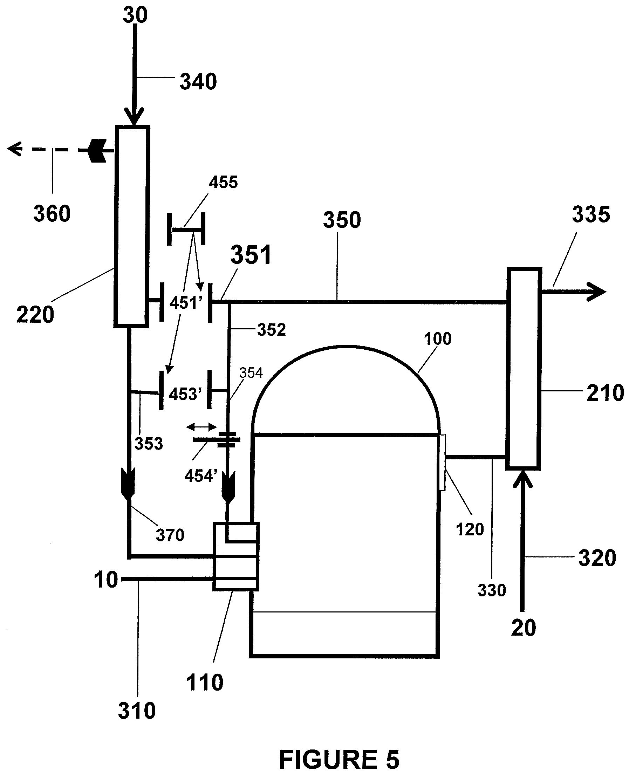

La figure 5 montre d'autres dispositifs de fermeture manuelle particulièrement robustes.

Dans la forme de réalisation illustrée, les branches 351 et 353 du réseau de canalisations sont chacune munies de deux brides espacées l'une par rapport à l'autre. Quand la branche est totalement bloquée, une plaque de fermeture est montée de manière étanche sur les deux brides. Pour permettre le transport d'oxydant chaud à travers l'une ou l'autre desdites branches 351 et 353, les plaques de fermeture sont enlevées et remplacées par une section de canalisation 455 ayant une longueur correspondant à la distance 451', de respectivement 453' entre les deux brides de manière à permettre l'écoulement d'un fluide à travers lesdites branches 351, respectivement 353. En sélectionnant des sections de canalisation 455 de différents diamètres internes, il est possible de faire varier le débit à travers les branches.

La branche 354 est munie d'un dispositif de fermeture manuelle alternatif : la branche 354 comporte deux brides à faible distance l'une de l'autre. Entre ces deux brides se trouve une plaque 454' ayant une épaisseur qui correspond essentiellement à la distance entre les brides et comportant une ou plusieurs ouvertures calibrées. En déplaçant la plaque 454' entre les deux brides, il est possible de totalement bloquer tout écoulement à travers la branche 354 (quand une partie massive de la plaque se trouve dans la prolongation de la branche 354) ou de permettre un écoulement plus ou moins important (quand une ouverture calibrée plus ou moins importante se trouve dans la prolongation de la branche 354).

Grâce à la présente invention, l'autonomie du four par rapport à la fourniture d'oxydant riche en oxygène est fortement augmentée.

On constate également que, même en cas de pénurie d'oxydant riche en oxygène, le procédé et l'installation suivant l'invention permettent une très grande flexibilité dans le fonctionnement du four pendant la deuxième phase et permettent ainsi d'adapter le fonctionnement du four selon l'effet principal recherché pendant cette deuxième phase (maintenir au maximum la tirée, tirée réduite avec maintien des propriétés du verre fondu, maintien à température prolongée, etc.).

## Revendications

1. Procédé de fusion de verre dans un four de fusion,
• ledit procédé utilisant
i. un premier oxydant choisi parmi l'air et l'air enrichi en oxygène et
ii. un deuxième oxydant ayant une teneur en oxygène de 80%vol à 100%vol, de préférence de 90%vol à 100%vol,
la teneur en oxygène du deuxième oxydant étant supérieure à la teneur en oxygène du premier oxydant,
• le four de fusion comportant :
i. une chambre de fusion équipée de n brûleurs pour la combustion d'un combustible dans la chambre, lesdits n brûleurs générant de l'énergie thermique et un flux chaud de fumées présentant une température à la sortie de la chambre de 1000°C à 1600°C, avec n ≥ 1, m desdits n brûleurs étant des premiers brûleurs, avec 1 ≤ m ≤ n, et
ii. une installation de préchauffage,
procédé dans lequel :
• de la matière première solide est fondue dans la chambre de fusion avec obtention de verre fondu,
• le flux chaud de fumées issu de la chambre est introduit dans l'installation de préchauffage,
• un flux d'un fluide caloporteur est chauffé par échange thermique avec le flux chaud des fumées dans un premier échangeur thermique de l'installation de préchauffage de manière à générer un flux refroidi des fumées et un flux chauffé du fluide caloporteur ayant une température de 600°C à 900°C,
et dans lequel :
• dans une première phase du procédé :
- le premier oxydant est utilisé comme fluide caloporteur, et
- un flux du deuxième oxydant est préchauffé dans un deuxième échangeur thermique de l'installation de préchauffage par échange thermique avec le flux chauffé du fluide caloporteur de manière à générer un flux préchauffé du deuxième oxydant ayant une température de 400°C à 650°C et un flux tempéré du fluide caloporteur ayant une température de 350°C à 650°C,
- un débit DO1 du flux préchauffé du deuxième oxydant est fourni aux m premiers brûleurs en tant que comburant, avec DO1 > 0 Nm³,
le procédé étant **caractérisé en ce que** :
• dans une deuxième phase :
- un débit DO2 du deuxième oxydant et un débit DA2 du premier oxydant sont fournis aux m premiers brûleurs en tant que comburants, avec DO1 > DO2 > 0 Nm³ et DA2 > 0 Nm³,
- le débit DA2 du premier oxydant est fourni aux m premiers brûleurs sous forme d'une portion correspondante du flux chauffé du fluide caloporteur,
- le débit DO2 du deuxième oxydant est fourni aux m premiers brûleurs :
∘ entièrement séparément du débit DA2 du premier oxydant, ou
∘ entièrement en mélange avec le débit DA2 du premier oxydant, ou
∘ partiellement mélangé avec le débit DA2 du premier oxydant et partiellement séparément du débit DA2 du premier oxydant,
de manière à ce que :
i. quand le débit DO2 du deuxième oxydant est partiellement ou totalement mélangé avec le premier oxydant en amont du premier échangeur thermique de l'installation de préchauffage, le mélange ainsi obtenu est utilisé comme fluide caloporteur et,
ii. quand le débit DO2 du deuxième oxydant n'est pas mélangé avec le débit DA2 du premier oxydant en amont du premier échangeur thermique mais uniquement partiellement ou totalement en aval du premier échangeur thermique ou pas du tout, le premier oxydant est utilisé comme fluide caloporteur.

2. Procédé suivant la revendication 1, dans lequel la teneur en oxygène du premier oxydant est entre 21%vol et 40%vol.

3. Procédé suivant la revendication 2, dans lequel la teneur en oxygène du premier oxydant est entre 21%vol et 25%vol.

4. Procédé suivant la revendication 1, dans lequel la teneur en oxygène du premier oxydant est de 40%vol à 90%vol.

5. Procédé suivant l'une quelconque des revendications précédentes, dans lequel le four de fusion est un four à brûleurs longitudinaux ou un four à brûleurs transversaux.

6. Procédé suivant l'une quelconque des revendications précédentes, dans lequel m = n.

7. Procédé suivant l'une quelconque des revendications précédentes, dans lequel on utilise l'installation de préchauffage pour également préchauffer le combustible en amont de la chambre de fusion.

8. Installation de fusion de verre comportant :
• une unité de fourniture comportant :
i. une source de combustible (10),
ii. une première source (20) d'un premier oxydant qui consiste en de l'air ou de l'air enrichi en oxygène,
iii. une deuxième source (30) d'un deuxième oxydant ayant une teneur en oxygène de 80%vol à 100%vol, de préférence de 90%vol à 100%vol, et supérieure à la teneur en oxygène du premier oxydant,
• un four de fusion comportant :
i. une chambre de fusion (100) équipée de n brûleurs pour la combustion d'un combustible avec génération d'énergie thermique et un flux chaud de fumées à l'intérieur de la chambre (100), avec n ≥ 1, la chambre de fusion (100) comportant également une sortie de fumées(120120) pour l'évacuation de la chambre du flux chaud de fumées,
ii. une installation de préchauffage (210, 220),
• un réseau de canalisations reliant l'unité de fourniture (10, 20, 30), l'installation de préchauffage (210, 220) et la chambre de fusion (100), installation de fusion dans laquelle :
• m des n brûleurs sont des premiers brûleurs (110), avec 1 ≤ m ≤ n, et
• l'installation de préchauffage comporte :
i. un premier échangeur thermique (210) pour le chauffage d'un flux d'un fluide caloporteur contenant du premier oxydant par échange thermique avec le flux chaud de fumées, le réseau de canalisation reliant la sortie de fumées (120120) de la chambre de fusion (100) à une entrée de flux chaud de fumées dudit premier échangeur thermique (210) et reliant la première source (20) à une entrée de fluide caloporteur à chauffer dudit premier échangeur thermique (210),
ii. un deuxième échangeur thermique (220) pour le préchauffage d'un flux du deuxième oxydant par échange thermique avec le flux chauffé de fluide caloporteur, le réseau de canalisations reliant la deuxième source (30) avec une entrée du deuxième oxydant du deuxième échangeur (220), reliant une sortie de flux chauffé de fluide caloporteur du premier échangeur thermique (210) avec une entrée de flux chauffé de fluide caloporteur du deuxième échangeur thermique (220) et reliant une sortie d'un flux chaud de deuxième oxydant du deuxième échangeur thermique (220) avec une entrée de comburant des m premiers brûleurs (110),
**caractérisée en ce que**:
• le réseau de canalisations relie également une sortie de flux chauffé de fluide caloporteur du premier échangeur thermique avec une entrée de comburant des m premiers brûleurs,
• le réseau de canalisations étant muni d'un système de réglage et de distribution (400) pour le réglage et la distribution du débit du premier oxydant vers les m premiers brûleurs (110) et pour le réglage et la distribution du débit du deuxième oxydant vers les m premiers brûleurs (110).

9. Installation suivant la revendication 8 dans laquelle, le système de réglage et de distribution comporte une unité de réglage (400) reliée à la deuxième source (30) pour la détection d'un débit ou volume disponible du deuxième oxydant et de préférence, également pour le réglage des débits du premier et du deuxième oxydants vers les m premiers brûleurs (110) en fonction du débit ou volume disponible détecté.

10. Installation suivant l'une des revendications 8 ou 9, dans laquelle l'unité de fourniture comprend également un réservoir de dépannage de deuxième oxydant.

11. Installation suivant l'une des revendications 8 à 10, dans laquelle m = n.

12. Installation suivant l'une quelconque des revendications 8 à 11, dans laquelle le réseau de canalisations relie une sortie de flux chauffé de fluide caloporteur du premier échangeur thermique (210) avec une entrée de comburant des m premiers brûleurs (110) sans passage par le deuxième échangeur thermique (220).

13. Installation suivant l'une quelconque des revendications 8 à 12, dans laquelle la première source de comburant est un pipeline, un réservoir de premier comburant liquéfié ou une installation de séparation des gaz de l'air, de préférence un pipeline ou une installation de séparation des gaz de l'air.

14. Installation suivant l'une quelconque des revendications précédentes, dans laquelle l'unité de fourniture comprend également un réservoir de dépannage du deuxième oxydant.

15. Installation suivant l'une quelconque des revendications 8 à 14, ladite installation comportant un four de fusion à brûleurs longitudinaux ou à brûleurs transversaux.

## Patentansprüche

1. Verfahren zum Schmelzen von Glas in einem Schmelzofen,
• wobei das Verfahren Folgendes verwendet
i. ein erstes Oxidationsmittel, gewählt aus Luft und mit Sauerstoff angereicherter Luft, und
ii. ein zweites Oxidationsmittel, das einen Sauerstoffgehalt von 80 Vol.-% bis 100 Vol.-%, vorzugsweise von 90 Vol.-% bis 100 Vol.-% aufweist,
wobei der Sauerstoffgehalt des zweiten Oxidationsmittels höher ist als der Sauerstoffgehalt des ersten Oxidationsmittels,
• wobei der Schmelzofen umfasst:
i. eine Schmelzkammer, die mit n Brennern für die Verbrennung eines Brennstoffes in der Kammer ausgestattet ist, wobei die n Brenner Wärmeenergie und eine warme Rauchströmung erzeugen, die eine Temperatur am Ausgang der Kammer von 1000 °C bis 1600 °C aufweist, mit n ≥ 1, wobei m der n Brenner erste Brenner sind, mit 1 ≤ m ≤ n, und
ii. eine Vorwärmanlage,
wobei in dem Verfahren:
• fester Rohstoff in der Schmelzkammer mit Erhalt von geschmolzenem Glas geschmolzen wird,
• die warme Rauchströmung aus der Kammer in die Vorwärmanlage eingeleitet wird,
• eine Strömung eines Wärmeträgerfluids durch Wärmeaustausch mit der warmen Rauchströmung in einem ersten Wärmetauscher der Vorwärmanlange erwärmt wird, sodass eine abgekühlte Rauchströmung und eine erwärmte Strömung des Wärmeträgerfluids erzeugt werden, die eine Temperatur von 600 °C bis 900 °C aufweist,
und wobei:
• in einer ersten Phase des Verfahrens:
- das erste Oxidationsmittel als Wärmeträgerfluid verwendet wird und
- eine Strömung des zweiten Oxidationsmittels in einem zweiten Wärmetauscher der Vorwärmanlage durch Wärmeaustausch mit der erwärmten Strömung des Wärmeträgerfluids vorerwärmt wird, sodass eine vorerwärmte Strömung des zweiten Oxidationsmittels erzeugt wird, die eine Temperatur von 400 °C bis 650 °C aufweist, und eine temperierte Strömung des Wärmeträgerfluids, die eine Temperatur von 350 °C bis 650 °C aufweist,
- wobei ein Durchsatz DO1 der vorerwärmten Strömung des zweiten Oxidationsmittels den m ersten Brennern als Sauerstoffträger zugeführt wird, mit DO1 > 0 Nm³,
wobei das Verfahren **dadurch gekennzeichnet ist, dass**:
• in einer zweiten Phase:
- ein Durchsatz DO2 des zweiten Oxidationsmittels und ein Durchsatz DA2 des ersten Oxidationsmittels den m ersten Brennern als Sauerstoffträger zugeführt werden, mit DO1 > DO2 > 0 Nm³ und DA2 > 0 Nm³,
- der Durchsatz DA2 des ersten Oxidationsmittels den m ersten Brennern in Form eines entsprechenden Abschnitts der erwärmten Strömung des Wärmeträgerfluids zugeführt wird,
- der Durchsatz DO2 des zweiten Oxidationsmittels den m ersten Brennern folgendermaßen zugeführt wird:
∘ vollständig getrennt vom Durchsatz DA2 des ersten Oxidationsmittels oder
∘ vollständig im Gemisch mit dem Durchsatz DA2 des ersten Oxidationsmittels oder
∘ teilweise gemischt mit dem Durchsatz DA2 des ersten Oxidationsmittels und teilweise getrennt vom Durchsatz DA2 des ersten Oxidationsmittels,
sodass:
i. wenn der Durchsatz DO2 des zweiten Oxidationsmittels teilweise oder zur Gänze mit dem ersten Oxidationsmittel stromaufwärts vom ersten Wärmetauscher der Vorwärmanlage gemischt wird, das so erhaltene Gemisch als Wärmeträgerfluid verwendet wird, und
ii. wenn der Durchsatz DO2 des zweiten Oxidationsmittels nicht mit dem Durchsatz DA2 des ersten Oxidationsmittels stromaufwärts vom ersten Wärmetauscher gemischt wird, sondern ausschließlich teilweise oder zur Gänze stromabwärts vom ersten Wärmetauscher oder gar nicht, das erste Oxidationsmittel als Wärmeträgerfluid verwendet wird.

2. Verfahren nach Anspruch 1, wobei der Sauerstoffgehalt des ersten Oxidationsmittels zwischen 21 Vol.-% und 40 Vol.-% beträgt.

3. Verfahren nach Anspruch 2, wobei der Sauerstoffgehalt des ersten Oxidationsmittels zwischen 21 Vol.-% und 25 Vol.-% beträgt.

4. Verfahren nach Anspruch 1, wobei der Sauerstoffgehalt des ersten Oxidationsmittels von 40 Vol.-% bis 90 Vol.-% beträgt.

5. Verfahren nach einem der vorstehenden Ansprüche, wobei der Schmelzofen ein Ofen mit Längsbrennern oder ein Ofen mit Querbrennern ist.

6. Verfahren nach einem der vorstehenden Ansprüche, wobei m = n.

7. Verfahren nach einem der vorstehenden Ansprüche, wobei die Vorwärmanlage verwendet wird, um den Brennstoff stromaufwärts von der Schmelzkammer ebenfalls vorzuwärmen.

8. Anlage zum Schmelzen von Glas, umfassend:
• eine Zuführeinheit, umfassend:
i. eine Brennstoffquelle (10)
ii. eine erste Quelle (20) eines ersten Oxidationsmittels, das aus Luft oder mit Sauerstoff angereicherter Luft besteht,
iii. eine zweite Quelle (30) eines zweiten Oxidationsmittels, das einen Sauerstoffgehalt von 80 Vol.-% bis 100 Vol.-%, vorzugsweise von 90 Vol.-% bis 100 Vol.-% aufweist, und der höher ist als der Sauerstoffgehalt des ersten Oxidationsmittels,
• einen Schmelzofen, umfassend:
i. eine Schmelzkammer (100), die mit n Brennern für die Verbrennung eines Brennstoffes mit Erzeugung von Wärmeenergie und einer warmen Rauchströmung innerhalb der Kammer (100) ausgestattet ist, mit n ≥ 1, wobei die Schmelzkammer (100) ebenfalls einen Rauchausgang (120120) für den Auslass der warmen Rauchströmung aus der Kammer umfasst,
ii. eine Vorwärmanlage (210, 220),
• ein Rohrleitungsnetz, das die Zuführeinheit (10, 20, 30), die Vorwärmanlage (210, 220) und die Schmelzkammer (100) verbindet, wobei in der Schmelzanlage:
• m der n Brenner erste Brenner (110) sind, mit 1 ≤ m ≤ n, und
• die Vorwärmanlage umfasst:
i. einen ersten Wärmetauscher (210) zum Erwärmen einer Strömung eines Wärmeträgerfluids, die erstes Oxidationsmittel enthält, durch Wärmeaustausch mit der warmen Rauchströmung, wobei das Rohrleitungsnetz den Rauchausgang (120120) der Schmelzkammer (100) mit einem Eingang der warmen Rauchströmung des ersten Wärmetauschers (210) verbindet und die erste Quelle (20) mit einem Eingang des zu erwärmenden Wärmeträgerfluids des ersten Wärmetauschers (210) verbindet,
ii. einen zweiten Wärmetauscher (220) zum Vorwärmen einer Strömung des zweiten Oxidationsmittels durch Wärmeaustausch mit der erwärmten Strömung des Wärmeträgerfluids, wobei das Rohrleitungsnetz die zweite Quelle (30) mit einem Eingang des zweiten Oxidationsmittels des zweiten Tauschers (220) verbindet, einen Ausgang der erwärmten Strömung des Wärmeträgerfluids des ersten Wärmetauschers (210) mit einem Eingang der erwärmten Strömung des Wärmeträgerfluids des zweiten Wärmetauschers (220) verbindet und einen Ausgang einer warmen Strömung des zweiten Oxidationsmittels des zweiten Wärmetauschers (220) mit einem Eingang des Sauerstoffträgers der m ersten Brenner (110) verbindet,
**dadurch gekennzeichnet, dass**:
• das Rohrleitungsnetz ebenfalls einen Ausgang der erwärmten Strömung des Wärmeträgerfluids des ersten Wärmetauschers mit einem Eingang des Sauerstoffträgers der m ersten Brenner verbindet,
• das Rohrleitungsnetz mit einem System zur Regelung und zur Ausgabe (400) für die Regelung und die Ausgabe des Durchsatzes des ersten Oxidationsmittels an die m ersten Brenner (110) und für die Regelung und die Ausgabe des Durchsatzes des zweiten Oxidationsmittels an die m ersten Brenner (110) versehen ist.

9. Anlage nach Anspruch 8, wobei das System zur Regelung und zur Ausgabe eine Regelungseinheit (400) umfasst, die mit der zweiten Quelle (30) für die Erfassung eines verfügbaren Durchsatzes oder Volumens des zweiten Oxidationsmittels und vorzugsweise ebenfalls für die Regelung der Durchsätze des ersten und des zweiten Oxidationsmittels an die m ersten Brenner (110) in Abhängigkeit vom erfassten verfügbaren Durchsatz oder Volumen verbunden ist.

10. Anlage nach einem der Ansprüche 8 oder 9, wobei die Zuführeinheit ebenfalls einen Notbehälter von zweitem Oxidationsmittel umfasst.

11. Anlage nach einem der Ansprüche 8 bis 10, wobei m = n.

12. Anlage nach einem der Ansprüche 8 bis 11, wobei das Rohrleitungsnetz einen Ausgang der erwärmten Strömung des Wärmeträgerfluids des ersten Wärmetauschers (210) mit einem Eingang des Sauerstoffträgers der m ersten Brenner (110) ohne Durchlass durch den zweiten Wärmetauscher (220) verbindet.

13. Anlage nach einem der Ansprüche 8 bis 12, wobei die erste Quelle des Sauerstoffträgers eine Pipeline, ein Behälter von verflüssigtem erstem Sauerstoffträger oder eine Anlage zur Trennung der Luftgase, vorzugsweise eine Pipeline oder eine Anlage zur Trennung der Luftgase ist.

14. Anlage nach einem der vorstehenden Ansprüche, wobei die Zuführeinheit ebenfalls einen Notbehälter des zweiten Oxidationsmittels umfasst.

15. Anlage nach einem der Ansprüche 8 bis 14, wobei die Anlage einen Schmelzofen mit Längsbrennern oder mit Querbrennern umfasst.

## Claims

1. Method for melting glass in a melting furnace,
• said method using
i. a first oxidant chosen from air and oxygen-enriched air and
ii. a second oxidant having a content in oxygen from 80% vol. to 100% vol., preferably from 90% vol. to 100% vol.,
the content in oxygen of the second oxidant being higher than the content in oxygen of the first oxidant,
• the melting furnace comprising:
i. a melting chamber provided with n burners for the combustion of a fuel in the chamber, said n burners generating thermal energy and a hot stream of fumes having a temperature at the outlet of the chamber from 1000°C to 1600°C, with n ≥ 1, m of said n burners being first burners, with 1 ≤ m ≤ n, and
ii. a preheating equipment,
method wherein:
• solid raw material is melted in the melting chamber with the obtaining of melted glass,
• the hot stream of fumes coming from the chamber is introduced into the preheating equipment,
• a stream of a heat transfer fluid is heated by heat exchange with the hot stream of the fumes in a first heat exchanger of the preheating equipment in such a way as to generate a cold stream of the fumes and a heated stream of the heat transfer fluid having a temperature from 600°C to 900°C,
and wherein:
• in a first phase of the method:
- the first oxidant is used as a heat transfer fluid, and
- a stream of the second oxidant is preheated in a second heat exchanger of the preheating equipment by heat exchange with the heated stream of the heat transfer fluid in such a way as to generate a preheated stream of the second oxidant having a temperature from 400°C to 650°C and a tempered stream of the heat transfer fluid having a temperature from 350°C to 650°C,
- a flow DO1 of the preheated stream of the second oxidant is supplied to the m first burners as an oxidiser, with DO1 > 0 Nm³,
the method being **characterised in that**:
• in a second phase:
- a flow DO2 of the second oxidant and a flow DA2 of the first oxidant are supplied to the m first burners as oxidisers, with DO1 > DO2 > 0 Nm³ and DA2 > 0 Nm³
- the flow DA2 of the first oxidant is supplied to the m first burners in the form of a corresponding portion of the heated stream of the heat transfer fluid,
- the flow DO2 of the second oxidant is supplied to the m first burners:
∘ entirely separately from the flow DA2 of the first oxidant, or
∘ entirely in a mixture with the flow DA2 of the first oxidant, or
∘ partially mixed with the flow DA2 of the first oxidant and partially separately from the flow DA2 of the first oxidant,
in such a way that:
i. when the flow DO2 of the second oxidant is partially or totally mixed with the first oxidant upstream from the first heat exchanger of the preheating equipment, the mixture thus obtained is used as a heat transfer fluid and,
ii. when the flow DO2 of the second oxidant is not mixed with the flow DA2 of the first oxidant upstream from the first heat exchanger but only partially or totally downstream from the first heat exchanger or not at all, the first oxidant is used as a heat transfer fluid.

2. Method according to claim 1, wherein the content in oxygen of the first oxidant is between 21% vol. and 40% vol.

3. Method according to claim 2, wherein the content in oxygen of the first oxidant is between 21% vol. and 25% vol.

4. Method according to claim 1, wherein the content in oxygen of the first oxidant is from 40% vol. to 90% vol.

5. Method according to any one of the preceding claims, wherein the melting furnace is a furnace with longitudinal burners or a furnace with cross-fire burners.

6. Method according to any one of the preceding claims, wherein m = n.

7. Method according to any one of the preceding claims, wherein use is made of the preheating equipment to also preheat the fuel upstream from the melting chamber.

8. Equipment for melting glass comprising:
• a supply unit comprising:
i. a source of fuel (10),
ii. a first source (20) of a first oxidant that consists of air or of oxygen-enriched air,
iii. a second source (30) of a second oxidant having a content in oxygen from 80% vol. to 100% vol., preferably from 90% vol. to 100% vol., and higher than the content in oxygen of the first oxidant,
• a melting furnace comprising:
i. a melting chamber (100) provided with n burners for the combustion of a fuel with the generation of thermal energy and a hot stream of fumes inside the chamber (100), with n ≥ 1, the melting chamber (100) also comprising an outlet of fumes (120120) for the evacuation from the chamber of the hot stream of fumes,
ii. a preheating equipment (210, 220),
• a network of pipes connecting the supply unit (10, 20, 30), the preheating equipment (210, 220) and the melting chamber (100),
equipment for melting wherein:
• m of the n burners are first burners (110), with 1 ≤ m ≤ n, and
• the preheating equipment comprises:
i. a first heat exchanger (210) for the heating of a stream of a heat transfer fluid containing the first oxidant by heat exchange with the hot stream of fumes, the network of pipes connecting the outlet of fumes (120120) of the melting chamber (100) to an inlet of the hot stream of fumes of said first heat exchanger (210) and connecting the first source (20) to an inlet of heat transfer fluid to be heated of said first heat exchanger (210),
ii. a second heat exchanger (220) for the preheating of a stream of the second oxidant by heat exchange with the heated stream of heat transfer fluid, the network of pipes connecting the second source (30) with an inlet of the second oxidant of the second exchanger (220), connecting an outlet of heated stream of heat transfer fluid of the first heat exchanger (210) with an inlet of heated stream of heat transfer fluid of the second heat exchanger (220) and connecting an outlet of a hot stream of second oxidant of the second heat exchanger (220) with an inlet of oxidiser of the m first burners (110),
**characterised in that**:
• the network of pipes also connects an outlet of heated stream of heat transfer fluid of the first heat exchanger with an inlet of oxidiser of the m first burners,
• the network of pipes being provided with a system for adjusting and distributing (400) for the adjusting and the distributing of the stream of the first oxidant to the m first burners (110) and for the adjusting and the distributing of the stream of the second oxidant to the m first burners (110).

9. Equipment according to claim 8 wherein the system for adjusting and distributing comprises a unit for adjusting (400) connected to the second source (30) for the detecting of an available stream or volume of the second oxidant and preferably, also for the adjusting of the streams of the first and of the second oxidants to the m first burners (110) according to the available stream or volume detected.

10. Equipment according to one of claims 8 or 9, wherein the supply unit also comprises a backup reservoir of second oxidant.

11. Equipment according to one of claims 8 to 10, wherein m = n.

12. Equipment according to any one of claims 8 to 11, wherein the network of pipes connects an outlet of heated stream of heat transfer fluid of the first heat exchanger (210) with an inlet of oxidiser of the m first burners (110) without passing through the second heat exchanger (220).

13. Equipment according to any one of claims 8 to 12, wherein the first source of oxidiser is a pipeline, a reservoir of first liquefied oxidiser or an equipment for separating gases from the air, preferably a pipeline or an equipment for separating gases from the air.

14. Equipment according to any one of the preceding claims, wherein the supply unit also comprises a backup reservoir of the second oxidant.

15. Equipment according to any of claims 8 to 14, said equipment comprising a melting furnace with longitudinal burners or with cross-fire burners.
